# EUROPÄISCHE PATENTSCHRIFT

(11) **EP 2 540 568 B1**
(45) Veröffentlichungstag und Bekanntmachung des Hinweises auf die Patenterteilung: **27.03.2019**
(21) Anmeldenummer: 12174414.8
(22) Anmeldetag: 29.06.2012
(51) Int. Cl.: B60P 7/14

(54) **Nutzfahrzeug**
Commercial vehicle
Véhicule utilitaire

(30) Priorität: 29.06.2011 DE 102011107350
(43) Veröffentlichungstag der Anmeldung: 02.01.2013
(73) Patentinhaber: Schmitz Cargobull AG, 48341 Altenberge (DE)
(72) Erfinder: Scholz, Volker, 48341 Altenberge (DE)
(74) Vertreter: Cohausz & Florack

(56) Entgegenhaltungen:
- EP-A2- 1 415 854
- DE-A1-102008 051 620
- DE-U1-202008 014 035
- DE-U1-202011 052 306
- FR-A1- 2 821 814

## Beschreibung

Die Erfindung betrifft ein Nutzfahrzeug, das eine vom Chassis des Nutzfahrzeug getragene Ladefläche und eine Sicherungseinrichtung umfasst, mit der der zum Beladen der Ladefläche zur Verfügung stehende Laderaum in mindestens zwei Abschnitte unterteilt werden kann, um auf der Ladefläche zu transportierendes Gut gegen ein unbeabsichtigtes Verschieben zu sichern. Die Ladefläche des Nutzfahrzeugs ist dabei an zwei gegenüberliegenden Seiten jeweils durch eine sich längs der Ladefläche erstreckende Begrenzungsleiste begrenzt, während die Sicherungseinrichtung an der Ladefläche im Bereich der Begrenzungsleisten errichtete Säulen, welche lösbar mit dem Chassis des Nutzfahrzeug verkoppelt sind, und mindestens ein Trennelement umfasst, das sich zwischen zwei gegenüberliegend zueinander an den Begrenzungsleisten positionierten Säulen erstreckt und mit den Säulen verkoppelt ist. Die Säulen selbst sind stehend auf den Begrenzungsleisten abgestützt und jeweils mittels eines ebenfalls auf der ihm zugeordneten Begrenzungsleiste stehenden Koppelglieds an der jeweiligen Begrenzungsleiste gehalten.

Eine in der voranstehend erläuterten Weise ausgebildete Sicherungseinrichtung für ein Nutzfahrzeug ist aus der US 3,741,127 A bekannt. Bei diesem Stand der Technik erstrecken sich die nach Art von Trennwänden ausgebildeten Trennelemente jeweils von der Ladefläche bis zu einer Decke eines auf dem Nutzfahrzeug errichteten Aufbaus. In die die Ladefläche in Längsrichtung begrenzenden Begrenzungsleisten sind in diesem Fall von ihrer freien Oberseite in regelmäßigen Abständen Öffnungen eingeformt, in die an den Enden der Säulen der Sicherungseinrichtung vorhandene Zapfen formschlüssig greifen. Die Zapfen sind dabei von einem verstärkten, als Koppelglied dienenden Endabschnitt der Säulen gehalten. Nachdem die Säulen mit den Zapfen aus den Öffnungen der Begrenzungsleisten gehoben sind, können sie längs der Ladefläche verschoben werden. Im Deckenbereich des Nutzfahrzeugaufbaus ist dazu ein Laufkatzensystem vorgesehen, das zur Positionierung und Festlegung der Säulen und der von ihr jeweils getragenen Trennwand dient. Im fertig positionierten Zustand erstreckt sich die Trennwand quer zur Längsrichtung der Ladefläche, so dass der über der Ladefläche vorhandene Laderaum in Längsrichtung gesehen in mindestens zwei Abschnitte unterteilt ist.

Während beim voranstehend beschriebenen gattungsbildenden Stand der Technik die Säulen auf den Begrenzungsleisten stehen, werden bei dem aus der EP 1 415 854 B1 bekannten Nutzfahrzeug seitliche Öffnungen des die Ladefläche tragenden Längsprofils des Fahrzeugschassis zum Halten der Säulen der Sicherungseinrichtung genutzt. Die Säulen sind dazu an ihren der Ladefläche zugeordneten Enden mit einem eine Verlängerung der jeweiligen Säule bildenden Stützblech versehen. An dessen dem Längsprofil zugeordneten Anlagefläche sind Haken befestigt, die in ihnen zugeordnete, in die seitliche Wand des Längsprofils eingeformte Öffnungen greifen.

Unabhängig davon, wie die Befestigung der Säulen der Sicherungseinrichtung an den die Ladefläche begrenzenden Begrenzungsleisten erfolgt, ist ihre Positionierung und Befestigung an der Ladefläche jeweils vergleichbar aufwändig. Dies gilt insbesondere für solche Fälle, bei denen die Sicherungseinrichtung lediglich bei Bedarf montiert wird, während sie, wenn sie nicht benötigt wird, an einem gesonderten Platz des Nutzfahrzeugs verstaut werden soll.

Vor dem Hintergrund des voranstehend erläuterten Standes der Technik bestand die Aufgabe der Erfindung darin, ein Nutzfahrzeug der eingangs angegebenen Art zu schaffen, bei dem der mit der Positionierung und Befestigung der Säulen der Sicherungseinrichtung verbundene Aufwand minimiert ist.

Diese Aufgabe ist erfindungsgemäß durch ein Nutzfahrzeug mit den in Anspruch 1 angegebenen Merkmalen gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Nutzfahrzeug weist in Übereinstimmung mit dem eingangs erläuterten Stand der Technik eine vom Chassis des Nutzfahrzeugs getragene Ladefläche, die an zwei gegenüberliegenden Seiten jeweils durch eine sich längs der Ladefläche erstreckende Begrenzungsleiste begrenzt ist, und eine Sicherungseinrichtung zum Sichern von auf der Ladefläche zu transportierender Ladung auf, wobei die Sicherungseinrichtung an der Ladefläche im Bereich der Begrenzungsleisten errichtete Säulen, welche lösbar mit dem Chassis des Nutzfahrzeugs verkoppelt sind, und mindestens ein Trennelement umfasst, das sich zwischen zwei gegenüberliegend zueinander an den Begrenzungsleisten positionierten Säulen erstreckt und mit den Säulen verkoppelt ist, wobei die Säulen auf den Begrenzungsleisten stehen und jeweils mittels eines ebenfalls auf der ihm zugeordneten Begrenzungsleiste stehenden Koppelglieds an der jeweiligen Begrenzungsleiste gehalten sind.

Erfindungsgemäß ist nun an der freien Oberseite der Begrenzungsleiste ein sich mindestens abschnittsweise über die Länge der Begrenzungsleiste erstreckendes Schienenelement ausgebildet, mit dem ein Verbindungselement zum Halten des Koppelglieds an der Begrenzungsleiste zusammenwirkt. Dabei ist die Anordnung von Koppelglied, Begrenzungsleiste, Schienenelement und Verbindungselement so gewählt, dass das Koppelglied bei wirksamem Verbindungsglied an der Oberseite der Begrenzungsleiste fixiert ist.

Bei einem erfindungsgemäßen Nutzfahrzeug erfolgt also die Befestigung der Säulen der Sicherungseinrichtung über ein an den Befestigungsleisten zusätzlich vorhandenes Formelement, über das eine formschlüssige Verbindung zwischen der Säule und der Befestigungsleiste hergestellt wird. Das betreffende Formelement ist dabei nach Art einer Schiene ausgebildet, welche sich zumindest abschnittsweise über die Länge der jeweiligen Befestigungsleiste erstreckt. Unabhängig davon, ob es sich dem Schienenelement um einen Steg oder eine Nut handelt, wirkt das an der jeweiligen Säule vorhandene Verbindungselement mit dem jeweiligen Schienenelement so zusammen, dass die Position der Säule an der Befestigungsleiste nach dem Anbringen des jeweiligen Verbindungselements eindeutig und dauerhaft festgelegt ist.

Der besondere Vorteil der erfindungsgemäßen Ausgestaltung eines Nutzfahrzeugs besteht darin, dass das erfindungsgemäß genutzte Schienenelement nicht nur unmittelbar zum Festlegen der jeweiligen Säule der Sicherungseinrichtung nutzbar ist, sondern auch als Anschlag oder als Führung dienen kann, wenn die jeweilige Säule gelöst und in eine neue Position entlang der jeweiligen Begrenzungsleiste bewegt werden soll. Zu diesem Zweck kann an dem Koppelglied eine formschlüssig mit dem Schienensteg zusammenwirkende Führung ausgebildet sein, durch die das Koppelglied bei gelöstem Verbindungselement längs der Begrenzungsleiste verschiebbar an dem Schienenelement gehalten ist. Im Fall, dass das Schienenelement nach Art eines Steges ausgebildet ist, kann es sich bei der betreffenden Führung des Koppelgliedes beispielsweise um einen an dem Koppelglied ausgebildeten Schlitz handeln, in den das stegförmige Schienenelement greift. Ist das Schienenelement dagegen als Nut ausgebildet, kann es sich bei der Führung um einen nach Art eines Schwertes geformten und in die Nut greifenden Vorsprung des Koppelglieds handeln.

Die Festlegung der jeweiligen Säule der Sicherungseinrichtung eines erfindungsgemäßen Nutzfahrzeugs kann auf einfache Weise dadurch bewerkstelligt werden, dass das Verbindungselement als an dem Koppelglied angeordnete lösbare Klemmeinrichtung ausgebildet ist, welche im Klemmzustand das Koppelglied an dem Schienenelement durch Klemmung hält. Der besondere Vorteil der Erfindung besteht in dieser Hinsicht darin, dass die Wirkrichtung des Verbindungselements problemlos so gewählt werden kann, dass auch unter den eng begrenzten räumlichen Bedingungen, unter denen die Befestigung der Säulen in der Praxis häufig erfolgen muss, eine leichte Zugänglichkeit gewährleistet ist. Dies ist beispielsweise dann der Fall, wenn es sich bei den Verbindungselementen um Schrauben, Knebel oder desgleichen handelt, deren Drehachse parallel zur Ladefläche ausgerichtet ist, so dass eine Verstellung des Verbindungselements auf einfache Weise aus in Bezug auf die jeweilige Säule seitlicher Richtung erfolgen kann.

Um eine besonders platzsparende Verstauung der Säulen einer bei einem erfindungsgemäßen Nutzfahrzeug vorgesehenen Sicherungseinrichtung zu ermöglichen, können die Säulen aus mindestens zwei Säulenabschnitten zusammengesetzt sein. Die Handhabung solcher Säulen beim Verstauen in entsprechend vorbereitete Staukästen des Nutzfahrzeugs und das Errichten der Säulen auf der Ladefläche kann dabei dadurch erleichtert werden, dass die Säulenabschnitte über ein Gelenk gelenkig miteinander verkoppelt sind, dessen Schwenkachse quer zur Längsachse der Säulen ausgerichtet ist. Indem die Schwenkachse dabei in bekannter Weise außerhalb der jeweiligen Säule, jedoch nahe einer der Seitenwände der jeweiligen Säule angeordnet wird, können die Säulen optimal platzsparend zusammengelegt werden. Dazu wird ein Abschnitt um die Schwenkachse geschwenkt, bis er dicht auf dem anderen Abschnitt liegt. Genauso lässt sich bei entsprechender Ausbildung der einander zugeordneten Abstützflächen der beiden Abschnitte bei dieser Anordnung der Schwenkachse der in Gebrauchsstellung jeweils obere Abschnitt auf dem unteren vollständig abstützen, ohne dass dazu die Schwenkachse selbst belastet werden muss.

Eine weitere zur Vielseitigkeit der Verwendung und einfachen Verstaubarkeit beitragende Ausgestaltung der Erfindung ist dadurch gekennzeichnet, dass das den Säulen der Sicherungseinrichtung jeweils zugeordnete Koppelglied nach Art eines Schuhs mit einer Aufnahme ausgebildet ist, in der die dem Koppelglied jeweils zugeordnete Säule mit ihrem einen Endabschnitt sitzt. Das schuhförmige Koppelglied erlaubt nicht nur eine optimal sichere Verteilung der von der jeweiligen Säule aufgenommenen Belastungen auf die Begrenzungsleiste, auf der die Säule steht, sondern erlaubt es im Fall, dass die Säule lösbar mit dem Koppelglied verbunden ist, darüber hinaus, das Koppelglied auf besonders einfache Weise ordnungsgemäß zu positionieren, bevor die jeweilige Säule in die ihr zugeordnete Aufnahme des Koppelglieds gestellt wird.

Alternativ oder ergänzend zu der unmittelbaren Befestigung an dem Schienenelement kann das Verbindungselement auch nach Art eines Hakens in eine in die freie Oberseite der jeweiligen Begrenzungsleiste eingeformte Öffnung greifen und gegen das Koppelglied verspannbar sein. In diesem Fall dient das Schienenelement im Wesentlichen zum Ausrichten der jeweiligen Säule, während die im praktischen Betrieb auftretenden Kräfte von dem in die Befestigungsleiste greifenden Verbindungselement aufgenommen werden.

Die Montage der erfindungsgemäß vorgesehenen Sicherungseinrichtung lässt sich dadurch weiter vereinfachen, dass das zum Verkoppeln der jeweiligen Säule mit der Begrenzungsleiste vorgesehene Verbindungselement verliersicher mit dem Koppelglied verbunden ist.

Grundsätzlich kann das bei einer erfindungsgemäß vorgesehenen Sicherungseinrichtung vorhandene Trennelement fest mit den das Trennelement tragenden Säulen verbunden sein. Eine besonders platzsparende Verstaubarkeit bei gleichzeitig optimaler Variabilität ergibt sich allerdings dann, wenn das Trennelement lösbar mit den ihm zugeordneten Säulen verkoppelt ist.

Üblicherweise ist das erfindungsgemäß vorgesehene mindestens eine Sicherungselement Teil eines Aufbaus, der den Laderaum des Nutzfahrzeugs während des Transports gegenüber der Umgebung abschirmt. Dabei handelt es sich bei einem erfindungsgemäß ausgestatteten Nutzfahrzeug insbesondere um einen Sattelauflieger des so genannten "Curtain-Sider-Typs", bei denen die Beladung der Ladefläche über die Längsseite erfolgt. Die den Längsseiten zugeordneten Seitenplanen des Aufbaus lassen sich in Richtung der Stirn- oder Rückseite des Aufbaus schieben. Die erfindungsgemäß vorgesehene mindestens eine Sicherungseinrichtung teilt bei einem solchen Aufbau den Laderaum in zwei Abschnitte, so dass das in dem einen Abschnitt gelagerte Transportgut daran gehindert ist, aufgrund der bei der Fahrt auftretenden dynamischen Kräfte in den jeweils anderen Abschnitt zu rutschen oder zu rollen.

Um unterschiedliche Ladehöhen des von dem Aufbau umgebenen Laderaums zu ermöglichen, ist die Länge der das Dach des Aufbaus tragenden Rungen veränderbar. Um einer solchen Veränderung folgen zu können, können die Säulen der mindestens einen Sicherungseinrichtung mindestens einen Säulenabschnitt weisen, der zur Verstellung der Länge der jeweiligen Säule in deren Längsrichtung verschiebbar ist.

Nachfolgend wird die Erfindung anhand von Ausführungsbeispielen näher erläutert. Es zeigen:

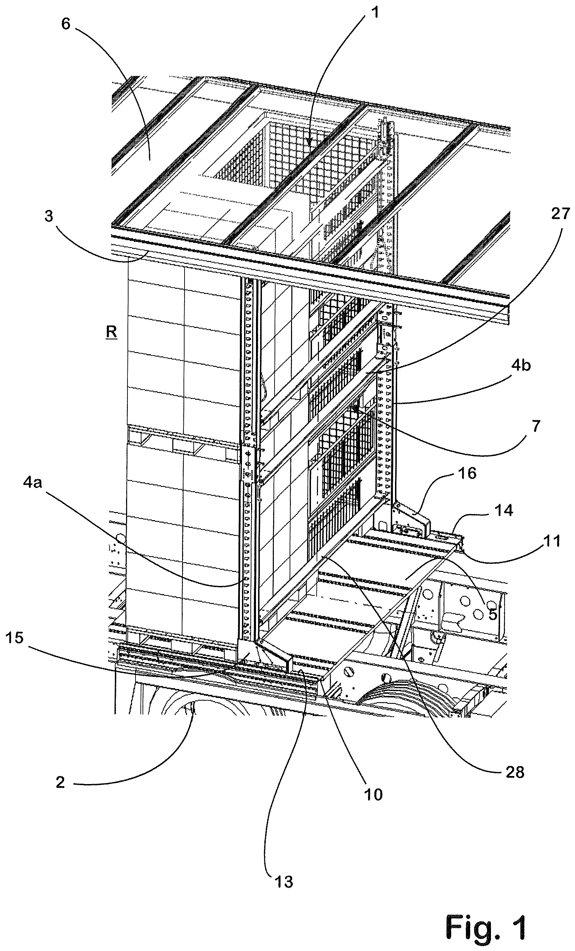

- Fig. 1: einen Ausschnitt eines Nutzfahrzeugs in perspektivischer Ansicht;

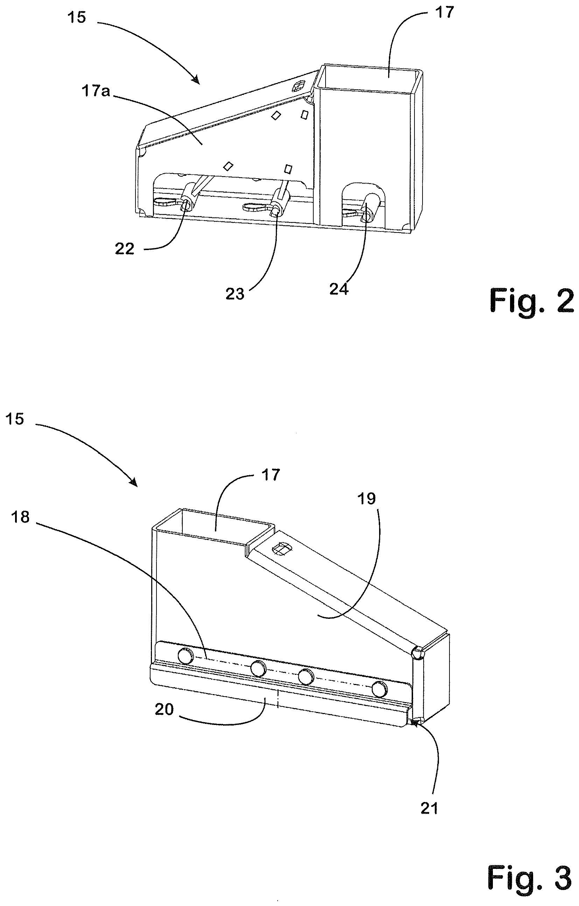

- Fig. 2: ein Koppelglied in einer ersten perspektivischen Ansicht;
- Fig. 3: das Koppelglied gemäß Fig. 2 in einer zweiten perspektivischen Ansicht;

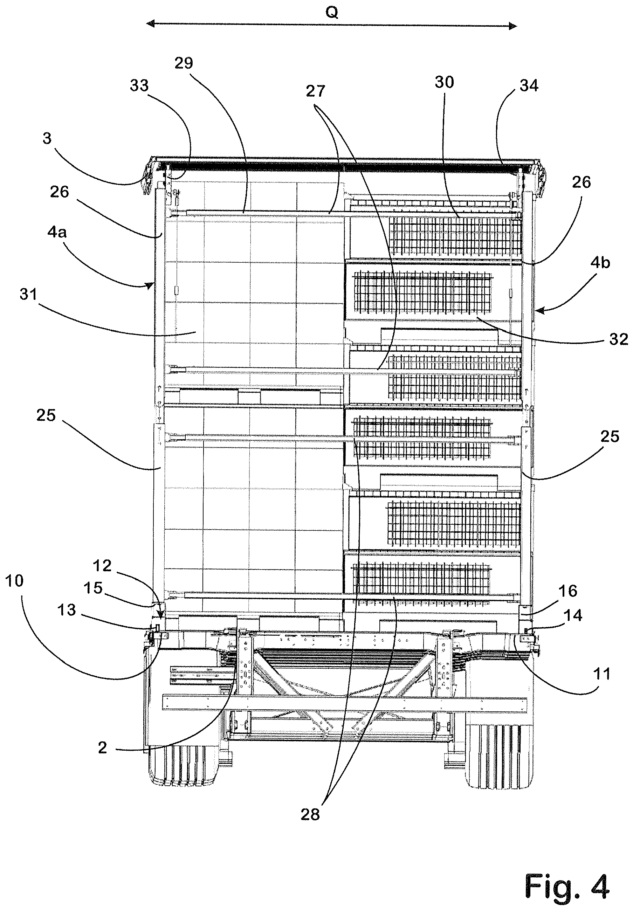

- Fig. 4: den Ausschnitt gemäß Fig. 1 in einer frontalen Ansicht;

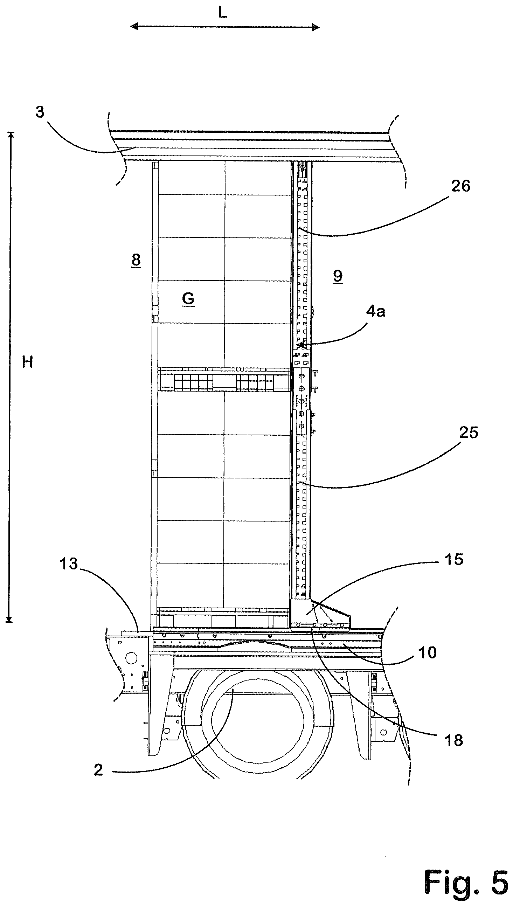

- Fig. 5: den Ausschnitt gemäß Fig. 1 in seitlicher Ansicht.

Bei dem hier nur im Ausschnitt dargestellten Nutzfahrzeug handelt es sich um einen konventionell aufgebauten Trailer vom so genannten "Curtain-Sider-Typ", wie er typischerweise bei einem Sattelzug eingesetzt wird. Das Nutzfahrzeug umfasst dabei einen hier ebenfalls nur im Ausschnitt gezeigten quaderförmigen Aufbau 1, der auf einem Fahrwerkschassis 2 montiert ist und einen mit zu transportierendem Gut G befüllbaren Laderaum R des Nutzfahrzeugs umgibt.

Die beiden Längsseiten des Aufbaus 1 sind in bekannter Weise jeweils durch eine hier nicht dargestellte Seitenplane verschlossen. Die Seitenplanen sind dabei jeweils mit ihrem oberen Längsrand an einem Rahmenholm 3 des Aufbaus 1 gelagert, der sich über die gesamte Länge des Trailers erstreckt und durch Säulen 4a,4b in einem bestimmten Abstand zu der Ladefläche 5 des Trailers gehalten wird. Auf den Säulen 4a,4b ist dabei das Dach 6 des Aufbaus 1 abgestützt, das sich im Wesentlichen parallel zur Ladefläche 5 erstreckt.

Die Säulen 4a,4b, in der Fachsprache oft auch als "Rungen" bezeichnet, sind Teil einer Sicherungseinrichtung 7, die quer zur Längserstreckung L des Nutzfahrzeugs ausgerichtet ist und den Laderaum R des Nutzfahrzeugs in zwei Abschnitte 8,9 teilt.

Die Ladefläche 5 ist an ihren Längsseiten jeweils durch eine Begrenzungsleiste 10,11 begrenzt. Die Begrenzungsleisten 10,11 weisen an ihrer ebenen, eine seitliche Verlängerung der Ladefläche 5 bildenden Oberseite 12 jeweils ein nach Art eines Stegs ausgebildetes und sich über die Länge der Ladefläche 5 erstreckendes Schienenelement 13,14 auf, das von der jeweiligen Oberseite 12 frei nach oben absteht und senkrecht zu der Ladefläche 5 ausgerichtet ist.

In der Praxis dienen die Schienenelemente 13,14 als Anschlagleisten, welche verhindern, dass auf der Ladefläche abgestellte Paletten oder anderes zu transportierendes Gut bei der Beladung der Ladefläche unbeabsichtigt über die jeweilige Begrenzungsleiste 10,11 hinausgeschoben werden.

Zusätzlich werden die Schienenelemente 13,14 hier in erfindungsgemäßer Weise zum Halten und Positionieren der Säulen 4a,4b an der ihr jeweils zugeordneten Begrenzungsleiste 10,11 genutzt. Zu diesem Zweck ist jeder der Säulen 4a,4b jeweils ein schuhförmiges Koppelglied 15,16 zugeordnet. Die Koppelglieder 15,16 sind jeweils aus einem Blechmaterial geformt und weisen eine Aufnahme 17, in der die jeweils zugeordnete Säule 4a,4b formschlüssig steckt, sowie ein seitlich abstehendes Stützteil 17a auf. An den Koppelgliedern 15,16 ist jeweils eine Führung 18 in Form eines Winkelblechs montiert, dessen parallel zur Seitenwand 19 des jeweiligen Koppelglieds 15,16 ausgerichteter Schenkel 20 in einem Abstand von der zugeordneten Seitenwand 19 angeordnet ist, der mit ausreichendem Spiel der Dicke des jeweiligen Schienenelements 13,14 der Begrenzungsleisten 10,11 entspricht. Auf diese Weise ist zwischen dem Schenkel 20 und der Seitenwand 19 ein Schlitz 21 begrenzt, in den das jeweilige Schienenelement 13,14 bei auf die Begrenzungsleisten 10,11 aufgesetzten Koppelgliedern 15,16 greift. Auf diese Weise ist jedes der Koppelglieder 15,16 an dem ihm zugeordneten Schienenelement geführt.

Die von der Seitenwand 19 abgewandte Seite der Koppelglieder 15,16 ist jeweils offen, so dass drei in dem Koppelglied 15,16 mit regelmäßigem Abstand zueinander gelagerte, als Knebelschrauben ausgebildete Verbindungselemente 22,23,24 von der Seite her frei zugänglich sind. Die Verbindungselemente 22-24 sind dabei in entsprechenden, in die Seitenwand 19 eingebrachten Gewindeöffnungen so ausgerichtet, dass sie bei auf die jeweilige Begrenzungsleiste 10,11 aufgesetztem Koppelglied 15,16 parallel zur Ladefläche 5 ausgerichtet sind und mit ihren Spitzen gegen das zugeordnete Schienenelement 13,14 wirken.

Durch ein gegen das jeweilige Schienenelement 13,14 gerichtetes Anziehen der Verbindungselemente 22-24 lässt sich das jeweilige Koppelglied 15,16 an dem ihm zugeordneten Schienenelement 13,14 auf der Oberseite 12 der jeweiligen Begrenzungsleiste 10,11 festklemmen. Das jeweilige Koppelglied 15,16 und die jeweils in ihm stehende Säule 4a,4b ist auf diese Weise einerseits auf der jeweiligen Begrenzungsleiste 10,11 abgestützt. Andererseits ist seine Position durch die Verklemmung an dem jeweiligen Schienenelement 13,14 fixiert. Zum Verschieben der jeweiligen Säulen 4a,4b können die Verbindungselemente 22-24 gelöst werden und die jeweilige Säule 4a,4b mit ihrem Koppelglied 15,16 entlang dem jeweils zugeordneten Schienenelement 13,14 verschoben werden.

Die Säulen 4a,4b sind jeweils in zwei gleichlange Abschnitte 25,26 geteilt, die jeweils durch ein Gelenk gelenkig miteinander verbunden sind. Auf diese Weise können die Abschnitte 25,26 gegeneinander geschwenkt werden, bis sie dicht aufeinander liegen. Die Säulen 4a,4b nehmen in diesem zusammengefalteten Zustand nur noch etwa die Hälfte ihrer Länge im ausgeklappten Zustand ein.

Einander in Querrichtung Q der Ladefläche 5 gegenüberliegend angeordnete Säulen 4a,4b tragen jeweils stangenartige Trennelemente 27,28, die mit ihren Enden in bekannter Weise lösbar in entsprechend geformte Aufnahmen der Säulen 4a,4b eingehängt sind. Die Trennelemente 27,28 können ebenfalls in zwei oder mehr fest miteinander verbindbare und voneinander lösbare Abschnitte 29,30 getrennt sein, um ihre einfache, platzsparende Verstauung zu ermöglichen.

Mittels hier nicht dargestellter Diagonalstreben kann die jeweils durch ein Paar von Säulen 4a,4b und den von ihnen getragenen Sicherungseinrichtungen 7 zusätzlich ausgesteift werden.

Um eine Verstellung der Länge der Säulen 4a,4b zwecks Veränderung der Höhe H des Aufbaus 1 zu ermöglichen, ist an den oberen, dem Dach 6 des Aufbaus 1 zugeordneten Enden der Säulen 4a,4b jeweils ein in Längsrichtung der jeweiligen Säule 4a,4b verschiebbarer und in seiner jeweiligen Schiebstellung lösbar arretierbarer Abschnitt 33,34 angeordnet. Der jeweilige riegelartige Abschnitt 33,34 ist dabei an der dem Laderaum R zugeordneten Seite der jeweiligen Säule 4a,4b angeschlagen, um ausreichend Platz für den Rahmenholm 3 zu schaffen. Mittels einer auf Höhe der Trennfuge zwischen den Säulenabschnitten 25,26 angeordneten Betätigungseinrichtung kann der jeweilige riegelartige Abschnitt 33,34 gelöst, in Längsrichtung der jeweiligen Säule 4a,4b verschoben und arretiert werden.

### BEZUGSZEICHEN

- 1: Aufbau
- 2: Fahrwerkschassis
- 3: Rahmenholm des Aufbaus 1
- 4a,4b: Säulen
- 5: Ladefläche des Trailers
- 6: Dach des Aufbaus 1
- 7: Sicherungseinrichtung
- 8,9: Abschnitte des Laderaums R
- 10,11: Begrenzungsleisten
- 12: freie Oberseite der Begrenzungsleisten 10,11
- 13,14: Schienenelemente
- 15,16: Koppelglieder
- 17: jeweilige Aufnahme der Koppelglieder 15,16
- 17a: jeweiliges Stützteil der Koppelglieder 15,16
- 18: Führung
- 19: Seitenwand des jeweiligen Koppelglieds 15,16
- 20: Schenkel der Führung 18
- 21: Schlitz
- 22-24: Verbindungselemente
- 25,26: Abschnitte der Säulen 4a,4b
- 27,28: Trennelemente
- 29,30: Abschnitte der Trennelemente 27,28
- 31,32: Diagonalstreben
- 33,34: riegelförmige Abschnitte

- H: Höhe des Aufbaus 1
- G: zu transportierendes Gut
- L: Längserstreckung des Trailers
- Q: Querrichtung der Ladefläche 5
- R: Laderaum des Nutzfahrzeugs

## Patentansprüche

1. Nutzfahrzeug, mit einer vom Chassis des Nutzfahrzeugs getragenen Ladefläche (5), die an zwei gegenüberliegenden Seiten jeweils durch eine sich längs der Ladefläche (5) erstreckende Begrenzungsleiste (10,11) begrenzt ist, und mit einer Sicherungseinrichtung (7) zum Sichern von auf der Ladefläche (5) zu transportierender Ladung (G), wobei die Sicherungseinrichtung (7) an der Ladefläche (5) im Bereich der Begrenzungsleisten (10,11) errichtete Säulen (4a,4b), welche lösbar mit dem Chassis (2) des Nutzfahrzeugs verkoppelt sind, und mindestens ein Trennelement (27,28) umfasst, das sich zwischen zwei gegenüberliegend zueinander an den Begrenzungsleisten (10,11) positionierten Säulen (4a,4b) erstreckt und mit den Säulen (4a,4b) verkoppelt ist, wobei die Säulen (4a,4b) auf den Begrenzungsleisten (10,11) stehen und jeweils mittels eines ebenfalls auf der ihm zugeordneten Begrenzungsleiste (10,11) stehenden Koppelglieds (15,16) an der jeweiligen Begrenzungsleiste (10,11) gehalten sind, **dadurch gekennzeichnet, dass** an der freien Oberseite (12) der Begrenzungsleiste (10,11) ein sich mindestens abschnittsweise über die Länge (L) der Begrenzungsleiste (10,11) erstreckendes Schienenelement (13,14) ausgebildet ist, mit dem ein Verbindungselement (22-24) zusammenwirkt, das das Koppelglied (15,16) an der Oberseite (12) der Begrenzungsleiste (10,11) fixiert.

2. Nutzfahrzeug nach Anspruch 1, **dadurch gekennzeichnet, dass** an dem Koppelglied (15,16) eine formschlüssig mit dem Schienenelement (13,14) zusammenwirkende Führung (18) ausgebildet ist, durch die das Koppelglied (15,16) bei gelöstem Verbindungselement längs der Begrenzungsleiste (10,11) verschiebbar an dem Schienenelement (13,14) gehalten ist.

3. Nutzfahrzeug nach einem der voranstehenden Ansprüche, **dadurch gekennzeichnet, dass** das Schienenelement (13,14) nach Art eines Steges ausgebildet ist.

4. Nutzfahrzeug nach einem der voranstehenden Ansprüche, **dadurch gekennzeichnet, dass** das Verbindungselement (22-24) als an dem Koppelglied (15,16) angeordnete lösbare Klemmeinrichtung ausgebildet ist, welche im Klemmzustand das Koppelglied (15,16) an dem Schienenelement (13,14) festlegt.

5. Nutzfahrzeug nach einem der voranstehenden Ansprüche, **dadurch gekennzeichnet, dass** die Säulen (4a,4b) mindestens zwei Säulenabschnitte (25,26) umfassen.

6. Nutzfahrzeug nach Anspruch 5, **dadurch gekennzeichnet, dass** die Säulenabschnitte (25,26) über ein Gelenk gelenkig miteinander verkoppelt sind, dessen Schwenkachse quer zur Längsachse der Säulen (4a,4b) ausgerichtet ist.

7. Nutzfahrzeug nach einem der voranstehenden Ansprüche, **dadurch gekennzeichnet, dass** das Koppelglied (15,16) nach Art eines Schuhs ausgebildet ist und eine Aufnahme (17) aufweist, in der die dem Koppelglied (15,16) jeweils zugeordnete Säule (4a,4b) mit ihrem einen Endabschnitt sitzt.

8. Nutzfahrzeug nach Anspruch 7, **dadurch gekennzeichnet, dass** die Säule (4a,4b) lösbar mit dem Koppelglied (15,16) verbunden ist.

9. Nutzfahrzeug nach einem der voranstehenden Ansprüche, **dadurch gekennzeichnet, dass** das Verbindungselement (22-24) nach Art eines Hakens in eine in die freie Oberseite (12) der jeweiligen Begrenzungsleiste (10,11) eingeformte Öffnung greift und gegen das Koppelglied (15,16) verspannbar ist.

10. Nutzfahrzeug nach einem der voranstehenden Ansprüche, **dadurch gekennzeichnet, dass** das Verbindungselement (22-24) verliersicher mit dem Koppelglied (15,16) verbunden ist.

11. Nutzfahrzeug nach einem der voranstehenden Ansprüche, **dadurch gekennzeichnet, dass** das Trennelement (27,28) lösbar mit den ihm zugeordneten Säulen (4a,4b) verkoppelt ist.

12. Nutzfahrzeug nach einem der voranstehenden Ansprüche, **dadurch gekennzeichnet, dass** die Säulen (4a,4b) mindestens einen Säulenabschnitt (33,34) aufweisen, der zur Verstellung der Länge der jeweiligen Säule (4a,4b) in deren Längsrichtung verschiebbar ist.

## Claims

1. Commercial vehicle, having a load bed (5) which is supported by the chassis of the commercial vehicle and is respectively delimited on two opposite sides by a boundary strip (10, 11) extending along the load bed (5), and having a securing device (7) for securing a load (G) which is to be transported on the load bed (5), wherein the securing device (7) comprises columns (4a, 4b) which are erected on the load bed (5) in the region of the boundary strips (10, 11) and are coupled in a releasable manner to the chassis (2) of the commercial vehicle, and comprises at least one separating element (27, 28) which extends between two columns (4a, 4b) positioned opposite one another on the boundary strips (10, 11), and is coupled to the columns (4a, 4b), wherein the columns (4a, 4b) stand on the boundary strips (10, 11) and are respectively held on the respective boundary strip (10, 11) by a coupling member (15, 16) which also stands on the boundary strip (10, 11) associated therewith, **characterised in that** formed on the free upper side (12) of the boundary strip (10, 11) is a rail element (13, 14) which extends at least in portions over the length (L) of the boundary strip (10, 11) and with which a connection element (22-24) cooperates which fixes the coupling member (15, 16) on the upper side (12) of the boundary strip (10, 11).

2. Commercial vehicle according to claim 1, **characterised in that** formed on the coupling member (15, 16) is a guide (18) which cooperates in a form-locking manner with the rail element (13, 14) and by which the coupling member (15, 16) is held on the rail element (13, 14) such that it can be moved along the boundary strip (10, 11) when the connection element has been released.

3. Commercial vehicle according to either of the preceding claims, **characterised in that** the rail element (13, 14) is formed in the manner of a web.

4. Commercial vehicle according to any of the preceding claims, **characterised in that** the connection element (22-24) is formed as a releasable clamping means which is arranged on the coupling member (15, 16) and which, in the clamping state, fixes the coupling member (15, 16) on the rail element (13, 14) .

5. Commercial vehicle according to any of the preceding claims, **characterised in that** the columns (4a, 4b) comprise at least two column portions (25, 26).

6. Commercial vehicle according to claim 5, **characterised in that** the column portions (25, 26) are coupled together in an articulated manner by a joint, the pivot axis of which is oriented transversely to the longitudinal axis of the columns (4a, 4b).

7. Commercial vehicle according to any of the preceding claims, **characterised in that** the coupling member (15, 16) is formed in the manner of a shoe and has a seat (17) in which the column (4a, 4b) respectively associated with the coupling member (15, 16) sits with its one end portion.

8. Commercial vehicle according to claim 7, **characterised in that** the column (4a, 4b) is connected in a releasable manner to the coupling member (15, 16).

9. Commercial vehicle according to any of the preceding claims, **characterised in that** the connection element (22-24) engages in the manner of a hook into an opening formed in the free upper side (12) of the respective boundary strip (10, 11), and it can be braced against the coupling member (15, 16).

10. Commercial vehicle according to any of the preceding claims, **characterised in that** the connection element (22-24) is connected in a captive manner to the coupling member (15, 16).

11. Commercial vehicle according to any of the preceding claims, **characterised in that** the separating element (27, 28) is coupled in a releasable manner to the columns (4a, 4b) associated therewith.

12. Commercial vehicle according to any of the preceding claims, **characterised in that** the columns (4a, 4b) have at least one column portion (33, 34) which is movable in the longitudinal direction of the respective column (4a, 4b) in order to adjust the length thereof.

## Revendications

1. Véhicule utilitaire avec une surface de chargement (5) portée par le châssis du véhicule utilitaire, ladite surface étant délimitée sur deux côtés opposés à chaque fois par une barre de délimitation (10, 11) s'étendant le long de la surface de chargement (5), et avec un dispositif de sécurité (7) pour sécuriser un chargement à transporter (G) sur la surface de chargement (5), où le dispositif de sécurité (7) comporte sur la surface de chargement (5), dans la zone des barres de délimitation (10, 11), des colonnes érigées (4a, 4b), lesquelles sont couplées de manière amovible avec le châssis (2) du véhicule utilitaire, et au moins un élément de séparation (27, 28) qui s'étend entre deux colonnes (4a, 4b) opposées l'une à l'autre positionnées sur les barres de délimitation (10, 11) et qui est couplé avec les colonnes (4a, 4b), où les colonnes (4a, 4b) se trouvent sur les barres de délimitation (10, 11) et sont maintenues sur la barre de délimitation respective (10, 11) respectivement au moyen d'un organe de couplage (15, 16) se trouvant également sur la barre de délimitation (10, 11) lui étant associée, **caractérisé en ce qu'**un élément de rail (13, 14) s'étendant au moins par sections sur la longueur (L) de la barre de délimitation (10, 11) est conçu sur la face supérieure (12) libre de la barre de délimitation (10, 11), avec lequel un élément de raccordement (22-24) coopère, lequel fixe l'organe de couplage (15, 16) sur la face supérieure (12) de la barre de délimitation (10, 11).

2. Véhicule utilitaire selon la revendication 1, **caractérisé en ce qu'**un guidage (18) coopérant par liaison de forme avec l'élément de rail (13, 14) est formé sur l'organe de couplage (15, 16), à travers lequel guidage l'organe de couplage (15, 16) est maintenu coulissant sur l'élément de rail (13, 14) le long de la barre de délimitation (10, 11), lors d'un élément de raccordement relâché.

3. Véhicule utilitaire selon l'une des revendications précédentes, **caractérisé en ce que** l'élément de rail (13, 14) est conçu à la manière d'une traverse.

4. Véhicule utilitaire selon l'une des revendications précédentes, **caractérisé en ce que** l'élément de raccordement (22-24) est conçu en tant que dispositif de serrage amovible formé sur l'organe de couplage (15, 16), lequel fixe, dans un état serré, l'organe de couplage (15, 16) à l'élément de rail (13, 14).

5. Véhicule utilitaire selon l'une des revendications précédentes, **caractérisé en ce que** les colonnes (4a, 4b) comportent au moins deux sections de colonne (25, 26).

6. Véhicule utilitaire selon la revendication 5, **caractérisé en ce que** les sections de colonne (25, 26) sont couplées entre elles de manière articulée par l'intermédiaire d'une articulation, dont l'axe de pivotement est dirigé transversalement par rapport à l'axe longitudinal des colonnes (4a, 4b).

7. Véhicule utilitaire selon l'une des revendications précédentes, **caractérisé en ce que** l'organe de couplage (15, 16) est conçu à la manière d'une chaussure et présente un logement (17) dans lequel loge, avec sa section terminale, la colonne (4a, 4b) respectivement associée à l'organe de couplage (15, 16).

8. Véhicule utilitaire selon la revendication 7, **caractérisé en ce que** la colonne (4a, 4b) est reliée de manière amovible à l'organe de couplage (15, 16).

9. Véhicule utilitaire selon l'une des revendications précédentes, **caractérisé en ce que** l'élément de raccordement (22-24) entre en prise à la manière d'un crochet avec une ouverture formée dans la face supérieure (12) de la barre de délimitation respective (10, 11) et est susceptible d'être serré contre l'organe de couplage (15, 16).

10. Véhicule utilitaire selon l'une des revendications précédentes, **caractérisé en ce que** l'élément de raccordement (22-24) est fermement relié à l'organe de couplage (15, 16) de manière à éviter toute perte.

11. Véhicule utilitaire selon l'une des revendications précédentes, **caractérisé en ce que** l'élément de séparation (27, 28) est couplé de manière amovible avec les colonnes (4a, 4b) lui étant associées.

12. Véhicule utilitaire selon l'une des revendications précédentes, **caractérisé en ce que** les colonnes (4a, 4b) présentent au moins une section de colonne (33, 34) qui est susceptible de pouvoir être déplacée dans sa direction longitudinale pour le réglage de la longueur des colonnes respectives (4a, 4b).
